# EUROPEAN PATENT APPLICATION

(11) **EP 1 830 106 A1**
(43) Date of publication of application: **05.09.2007**
(21) Application number: 05820373.8
(22) Date of filing: 21.12.2005
(51) Int. Cl.: F16H 25/22

(54) **BALL SCREW DEVICE**

(30) Priority: 22.12.2004 JP 2004370818; 09.08.2005 JP 2005231250
(71) Applicant: NSK LTD., Shinagawa-ku, Tokyo 141-8560 (JP)
(72) Inventor: TAKAHASHI, Daiju c/o NSK Ltd., Kanagawa 251-8501 (JP); NAGAI, Yutaka c/o NSK Precision Co. Ltd., Gunma 371-8527 (JP); NOBUTOMO, Masahiro c/o NSK Precision Co., Ltd., Gunma 371-8527 (JP)
(74) Representative: Grünecker, Kinkeldey, Stockmair & Schwanhäusser Anwaltssozietät
(86) International application number: PCT/JP2005/023538
(87) International publication number: WO 2006/068202

(57) **Abstract**

To surely and easily secure a return tube to a nut and prevent the return tube from floating and expanding when circulating failure of balls occurs. The ball screw device has a screw shaft having a helical shaft raceway groove on the outer face thereof, a nut having a nut raceway groove on the inner face so as to oppose to the shaft raceway groove, a load path formed by the shaft raceway groove and the nut raceway groove, balls rotatably mounted in the load path, a communicating member communicating both ends of the load path to guide the balls exterior of the nut and having a bent portion; a tube fixture for fixing the communicating member to the nut and a reinforcement member for receiving stress applied to the bent portion of the communicating member on an outer face of the tube fixture.

## Description

### Technical Field

This invention relates to a ball screw device for use in a feeding mechanism for positioning, transferring and power-transmission of a moving stand in a machining tool, industrial machine, semiconductor manufacturing device, injection molding machine, metal stamping machine, a precision machine, etc. and more particularly to a ball screw device for preferable use in an electric injection molding machine or an electric metal stamping machine.

### Background Art

There is a conventional ball screw device as shown in Fig. 2.
In a ball screw device 1, a screw shaft 3 having a screw groove 2 on the outer face and a nut 6 having a helical screw groove 4 corresponding to the screw groove 2 on the inner face are screwed with each other.
The screw groove 4 of the nut 6 and the screw groove 2 of the screw shaft 3 are arranged oppositely to each other so that a helical load region is formed therebetween. A large number of balls 5 serving as rolling elements are rotatably mounted in the load region. By rotation of the screw shaft 3 (or nut 6), the nut 6 (or screw shaft 3) moves in an axial direction through the rolling movement of the balls 5.

A part of the side of the nut 6 is made flat. On the flat face, a set of two circulating holes 7 passing between both screw grooves 2 and 4 are formed to straddle the screw shaft 3. By fitting both ends of a return tube 8 having a U-shape in each of the set of circulating holes 7, the balls 5 revolving along the load region between both screw grooves 2 and 4 are scooped up from the one end of the return tube 8 and guided an exterior of the nut whereas the balls are returned from the other end in the load region. In this way, a ball circulating path is formed.

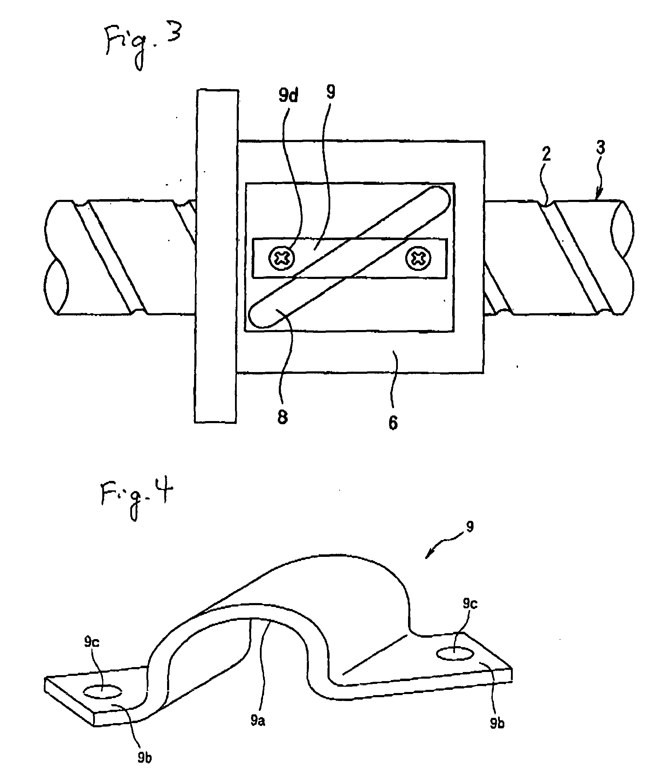

Further, in order to fix the return tube 8 onto the flat face of the nut 6, a tube fixture 9 as shown in Figs. 3 and 4 is employed. The tube fixture 9 is manufactured by metal stamping of a metallic sheet for mass-production at low cost. As shown in Fig. 4, at a nearly central position of the lower surface of the metallic sheet which is long in the axial direction of the nut 6, a groove 9a which is fit in the return tube 8 to press the return tube 8 is formed obliquely along the axial direction of the return tube 8. Both sides of the groove 9a are seats 9b in which screw passing holes 9c are formed.
The groove 9a of the tube fixture 9 is fit in the return tube 8. In this state, by tightening screws 9d passed through the screw passing holes 9c of the seats 9b into the screw holes (not shown) formed on the flat face of the nut 6, the return tube 8 is fixed to the nut 6.

In the above conventional return tube type ball screw device, in the uses in which great moment load acts on the ball screw device because of, e.g. a mounting error of the ball screw or shortage of the rigidity of the machine itself in which the ball screw device is built, as the case may be, the revolving speed of the balls 5 varies at different positions so that the balls 5 are lodged in the return tube 8, thus generating force of the balls 5 to push up the return tube 8. If such force acts on the return tube 8, the tube fixture 9 made by metallic-sheet metal stamping tends to be deformed in the seats 9b abutting on the flat face of the nut 6 and so the return tube 8 may float up.

Particularly, in the ball screw device employed in the electric injection molding machine or electric metal stamping machine requiring a high load capacity, in order to increase the load capacity, the ball diameter for a screw shaft diameter is designed to be as possible as large. In this case, when the ball diameter is large, the revolving energy of the ball 5 also becomes large. Further, the force of the ball 5 to push up the return tube 8 also becomes large so that the strength of the tube fixture must be improved.
In the use in which strength improvement is required for the tube fixture 9, as a countermeasure for preventing the float of the return tube 8, the tube fixture manufactured by machined from solid steel is employed. However, since this tube fixture is manufactured one by one by mechanical working, the machining cost becomes disadvantageously high.

Since the ball diameter is large and the revolving energy of the ball 5 is large, where the ball screw device is used for a long time, because of intermittent lodging of the balls 5 in the return tube 8, greater force than usual acts on the tube fixture through the return tube 8. As a result, the return tube 8 floats up owing to deformation or breakage of the tube fixture thereby to hinder smooth circulation of the balls 5. This may adversely affect the operability of the ball screw device.

Further, the ball screw device built in a machine which is relatively large in size and requires high load, such as an injection molding machine or metal stamping machine, is employed at a short stroke instantaneously providing high load. Namely, the ball screw device is generally employed under a severe condition of reciprocating movement that it once stops under the maximum load and thereafter operates inversely.
In the ball screw device employed in such a use, because of shortage of rigidity of the machine with the ball screw device built therein, distortion moment load acts between the screw shaft and nut. If the ball screw device is operated under the condition where the distortion moment load acts, the revolving speed of the balls varies within the load path so that the balls are lodged in a communicating path to provide "ball lodging". As a result, force to extend the communicating path left and right and force to push up the communicating path act on the communication path (These forces are called "expanding force).

Further, the communicating path of the ball screw device is formed in a U-shape having bent portions at two points in which the balls are scooped up from the load path and thereafter returned to the load path via a bent portion, a linear portion and another bent portion. So, if the ball lodging occurs, large expanding force acts on the bent portions of the communication path and the force becomes the maximum within the communication path.
In order to avoid the influence of such expanding force, it is effective to integrally mold the return tube which constitutes the communicating path by bending metallic tubes. However, in this case, the metallic tubes must be bent one by one so that the production cost will increase. Thus, usually, the return tube is formed in a manner divided into two parts in the circulating direction of the balls.

In the conventional ball screw device provided with the return tube divided into two parts, a load path is formed by a helical shaft raceway groove formed on the outer face of the screw shaft and a nut raceway groove formed on the inner face of the nut opposite to the shaft raceway groove; a circulating path is formed by coupling both ends of the load path by the return tube with bent communication paths; and the screw shaft and the nut are screw-engaged by a plurality of balls circulating along the circulating path. The return tube is formed by a pair of half-divided tubes when it is divided into two parts along the circulating direction of the balls. The central area of the return tube is sandwiched by the tube fixture to press the half-divided tube to each other, thereby assuring the strength of the return tube for the expanding force by the balls (For example, see Patent Literature 1).
Patent Literature 1: Japanese Utility Model Examined Publication JP-UM-B-3097525 (page 4, paragraph 0012 to page 5, paragraph 0022 and Fig. 4).

However, in the conventional technique describe above, since the central area of the return tube is sandwiched by the tube fixture, where the merging portion of the return tube at the bent portions generating the maximum expanding force when the ball lodging occurs is forcibly extended, the circulation of the balls is hindered. Thus, disadvantageously, circulating failure occurs so that the ball screw device may be damaged. As a result, the life time of the ball screw device becomes lowered.

### Disclosure of the Invention

### Problems that the Invention is to Solve

This invention has been accomplished in order to obviate such inconvenience. An object of this invention is to provide means capable of surely and easily securing a return tube to a nut, preventing the return tube from floating when circulating failure of balls occurs, and assuring the strength of the bent portions of the divided return tube. Another obj ect of this invention is to provide a ball screw device capable of giving a tube fixture at low cost.

### Means for Solving the Problems

The inventors of this invention have made analysis of the stress for a tube fixture which is an ordinary metal stamping product and have known the fact that the stress applied to the groove fit in the return tube and the seat abutting on the nut is high. On the basis of this knowledge, this invention has been accomplished.
Namely, in order to attain the above objects, according to a first aspect of the invention, there is provided a ball screw device comprising:
a screw shaft comprising a helical shaft raceway groove formed on an outer face thereof;
a nut comprising a nut raceway groove opposite to the shaft raceway groove, formed on the inner face;
a load path formed by the shaft raceway groove and the nut raceway groove;
a plurality of balls rotatably mounted in the load path;
a communicating member which communicates both ends of the load path to guide the balls an exterior of the nut and comprises a bent portion;
a tube fixture that fixes the communicating member to the nut;
the plurality of balls which circulate along a circulating path formed by the load path and the communicating member; and
a reinforcement member that receives stress applied to the bent portion of the communicating member and is provided on an outer face of the tube fixture.
According to a second aspect of the invention, as set forth in the first aspect of the invention, it is preferable that
the tube fixture comprises:
a seat which secures the tube fixture to the nut; and
a ridge covering the communicating member and being in nearly parallel to the seat, and
the reinforcement member is provided at least on the ridge.
According to a third aspect of the invention, as set forth in the first aspect of the invention, it is preferable that
the communicating member comprises a bent portion for converting the rolling direction of the balls, and
the reinforcement member is provided in the vicinity of the bent portion of the communicating member.
According to a fourth aspect of the invention, as set forth in the first aspect of the invention, it is preferable that
the tube fixture comprises:
a groove into which the communicating member fits; and
a seat abutting on the nut, and
a reinforcement rib is integrally formed so as to be protruded from a face of at least one of the groove and the seat.
According to a fifth aspect of the invention, as set forth in the fourth aspect of the invention, it is preferable that
the protruding height of the reinforcement rib is 1/5 to 2 times of a thickness of the tube fixture.
According to a sixth aspect of the invention, as set forth in the fourth aspect of the invention, it is preferable that
the tube fixture is a press machining product of a metallic sheet.
According to a seventh aspect of the invention, as set forth in the sixth aspect of the invention, it is preferable that
the tube fixture is subjected to thermo-hardening processing.
According to an eighth aspect of the invention, as set forth in the fourth aspect of the invention, it is preferable that
the tube fixture is an injection-molding product of synthetic resin.
According to a ninth aspect of the invention, as set forth in the first aspect of the invention, it is preferable that
the communicating member is formed of a member divided into at least two parts along the circulating direction of the balls;
the tube fixture comprises a communicating path and bent portions formed on both ends of the communicating path ; and
the tube fixture comprises:
a fitting groove covering the bent portions and fitting over the communicating member, and
a reinforcement member arranged on the bent portion.
According to a tenth aspect of the invention, as set forth in the ninth aspect of the invention, it is preferable that the communicating member is made of a resin material.
According to an eleventh aspect of the invention, as set forth in the ninth aspect of the invention, it is preferable that the communicating member is made of a metallic material.
According to a twelfth aspect of the invention, as set forth in the ninth aspect of the invention, it is preferable that the communicating member is a metal press machining product of a metallic material.
According to a thirteenth aspect of the invention, as set forth in the ninth aspect of the invention, it is preferable that the communicating member is an injection-molding product of a resin material.
According to a fourteenth aspect of the invention, as set forth in the ninth aspect of the invention, it is preferable that the tube fixture is a metal-sheet press machining product.
According to a fifteenth aspect of the invention, as set forth in the ninth aspect of the invention, it is preferable that the tube fixture is a draw forming product of a metallic material.
According to a sixteenth aspect of the invention, as set forth in the first aspect of the invention, it is preferable that the reinforcement member is formed in an uneven shape on the outer face of the tube fixture, or stacked on the outer face of the tube fixture.

### Advantage of the Invention

In accordance with this invention, as regards the tube fixture for securing the return tube to the nut, a reinforcement rib is integrally protruded from the plane of at least one of the groove fitting over the return tuber and the seat abutting on the nut. Therefore, the strength of the groove and seat of the tube fixture can be enhanced. Thus, even when circulating failure of balls occurs, it is possible to prevent the return tube from floating. Accordingly, the smooth circulation of the balls can be assured to preferably keep the operability of the ball screw device.

Further, in accordance with this invention, the strength of the bent portion can be assured using the reinforcement portion of the tube fixture. Therefore, even if the ball lodging occurs in the communicating path so that great expanding force acts on the bent portions, it is possible to prevent the merging portion of the communicating members from being forcibly extended, thereby increasing the life time of the ball screw device.
Further, since the tube fixture can be manufactured by metal stamping of a metallic sheet or injection molding of synthetic resin, the tube fixture which can be mass-manufactured at low cost can be provided.

### Brief Description of the Drawings

Fig. 1 is a perspective view for explaining the tube fixture for securing, to a nut, the return tube of a return-tube type screw device which is an embodiment of this invention.
Fig. 2 is a sectional view of an exemplary conventional return tube type ball screw device.
Fig. 3 is a view for explaining the ball screw device in which the return tube is secured by a conventional tube fixture.
Fig. 4 is a perspective view for explaining a conventional tube fixture.
Fig. 5 is a top view of a ball screw device according the second embodiment.
Fig. 6 is a sectional view of the ball screw device according to the second embodiment.
Fig. 7 is a top view of a tube fixture according to the second embodiment.
Fig. 8 is a view seen in direction A in Fig. 7.
Fig. 9 is a side view showing the attached state of the tube fixture according to the second embodiment.
Fig. 10 is a sectional view showing the attached state of the return tube according to the second embodiment.
Fig. 11 is a sectional view of another format of the communication member according to the second embodiment.
Fig. 12 is a top view of a tube fixture according to the third embodiment.
Fig. 13 is a view seen in direction B in Fig. 12.
Fig. 14 is a side view of the attached state of the tube fixture according to the third embodiment.
Fig. 15 is a top view of a tube fixture according to the fourth embodiment.
Fig. 16 is a view seen in direction C in Fig. 15.
Fig. 17 is a side view of the attached state of the tube fixture according to the fourth embodiment.
Fig. 18 is a perspective view of the tube fixture according to the fourth embodiment.

### Description of Reference Numerals and Signs

- 1: ball screw device
- 2: screw groove (screw shaft side)
- 3: screw shaft
- 4: screw groove
- 5: ball
- 6: nut
- 7: circulating hole
- 8: return tube
- 10: tube fixture
- 11: groove
- 12: seat
- 14, 15: a reinforcement rib
- 101: ball screw device
- 102: screw shaft
- 103: shaft raceway groove
- 104: nut
- 104a: flat face
- 105: nut raceway groove
- 106: ball
- 107: return tube
- 108: bent portion
- 109: merging portion
- 110: tube fixture
- 111: fitting groove
- 112: small screw
- 113: attaching hole
- 114: seat
- 116: reinforcement portion
- 118: flange
- 119: communicating block
- 120: bent portion
- 121, 122: reinforcement rib

### Best Mode of Carrying out the Invention

### Embodiment 1

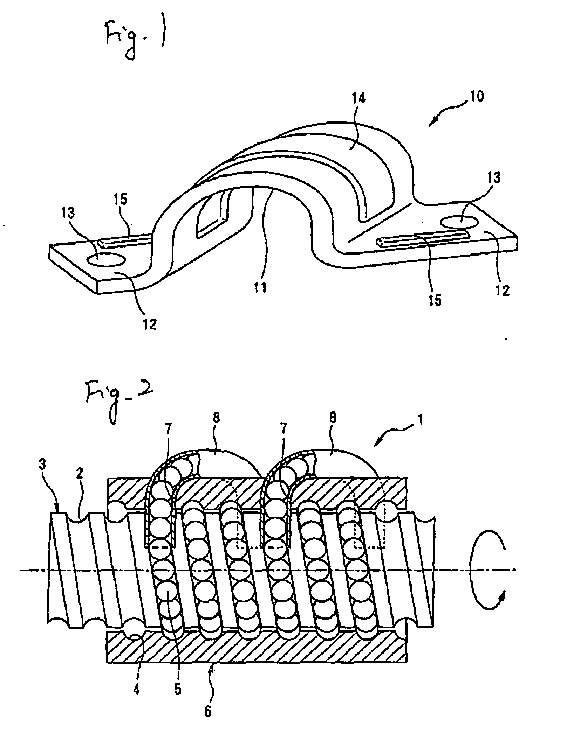

Now referring to the drawings, an explanation will be given of the first embodiment of this invention. Fig. 1 is a perspective view for explaining the tube fixture for securing to a nut, the return tube of a return-tube type screw device which is an embodiment of this invention. Incidentally, this embodiment is different from the conventional return-tube type ball screw device previously explained with reference to Figs. 2 and 3 in only the tube fixture for securing the return tube. Therefore, only the difference will be explained and reference numerals in Figs. 2 and 3 will be employed as required.

In the return tube type ball screw device of the first embodiment of this invention, with both ends of the return tube 9 being fit in a pair of circulating tubes 7 of the nut 6, the return tube 8 is secured to the nut 6 by using a metallic tube fixture 10. The tube fixture 10 is manufactured by metal stamping of a metallic sheet. As shown in Fig. 1, at a nearly central position of the lower surface of the metallic sheet which is long in the axial direction of the nut 6, a groove 11 which is fit in the return tube 8 to press the return tube 8 is formed obliquely along the axial direction of the return tube 8. Both sides of the groove 11 are seats 12 in which screw passing holes 12 are formed.

Now, in this embodiment, reinforcement ribs 14 and 15 are integrally press-formed on the outer faces of the groove 11 and seats 12, respectively. Incidentally, in this embodiment, the reinforcement ribs 14, 15 are integrally formed by metal stamping simultaneously with molding the tube fixture 10, but they may be formed by metal stamping before or after the tube fixture 10 is formed.

The reinforcement rib 14 on the groove 11 side is formed to have a relatively large width and the nearly central area in the width direction of the outer face of the groove 11 is extended in the axial direction of the return tube 8 along the outer face. On the other hand, the reinforcement rib 15 on the seat 12 side is formed to have a relatively small width and extended along the axial direction of the nut 6 on the one side in the width direction of the seat 12. The two reinforcement ribs 15 formed on the seats 12 on both sides of the groove 11 are arranged in nearly parallel apart in the width direction so as to sandwich the reinforcement rib 14 on the groove 11 side.

Now, the protruding height of each of the reinforcement ribs 14, 15 is preferably 1/5 to 2 times of the sheet thickness of the tube fixture 10. If the protruding height of the reinforcement rib 14, 15 is smaller than 1/5 of the sheet thickness of the tube fixture 10, as the case may be, the rate of increasing the strength by provision of the reinforcement ribs is 10 % or less so that sufficient effect of improving the strength cannot be obtained. On the other hand, if the protruding height of the reinforcement rib 14, 15 exceeds twice of the sheet thickness of the tube fixture 10, the rise of the reinforcement rib is abrupt so that at the crossing points between the lower face of the reinforcement rib and the tube fixture, the stress in the press machining is excessive so that cracking may be generated.

Further, in this embodiment, the tube fixture 10 is subjected to thermo-hardening processing such as carburizing or nitriding. Thus, the strength of the tube fixture is further improved.
The groove 11 of the tube fixture 10 is fit over the return tube 8. In this state, by tightening screws 9d passed through the screw passing holes 13 of the seats 9b into the screw holes (not shown) formed on the flat face of the nut 6, the return tube 8 is fixed to the nut 6.

As described above, in this embodiment, as regards the tube fixture 10 for securing the return tube 8 to the nut 6, the reinforcement ribs 14, 15 are integrally formed so as to be protruded from the outer face of each of the groove 11 to be fit in the return tube 8 and seats 12 abutting on the nut 6. For this reason, the strength of the tube fixture 10 at the groove 11 and seats 12 can be increased. Thus, even when the circulating failure of the balls 5 occurs, the float of the return tube 8 can be prevented. As a result, smooth circulation of the balls 5 can be assured, thereby desirably keeping the operability of the ball screw device. Accordingly, there can be provided the ball screw device which can be used for an electric injection molding machine or electric pressing machine requiring high load capacity.

Further, since the tube fixture 10 is manufactured by metal stamping of a metallic sheet, the tube fixture 10 which can be mass-manufactured at low cost can be provided.
Further, as long as the ball screw device has a specification of the nut rotating movement, the weight of the tube fixture 10 is lighter than the tube fixture manufactured by machined from solid steel. Therefore, the eccentric load of the nut 6 can be reduced.
Incidentally, this invention should not be limited to the embodiment described above and can be appropriately changed within a scope not departing the spirit of the invention.

For example, in the above embodiment, as the tube fixture 10, a metal stamping product of a metallic sheet was used. In place of this, the tube fixture 10 may be an injection-molding product to provide the same operational advantage as described above.
Further, in the embodiment described above, as an example, a single return tube 8 was pressed by a single tube fixture 10. However, without being limited to this, the single tube fixture may be formed in a shape capable of pressing a plurality of return tubes.
Additionally, the material, shape, size, configuration, number and arranging position, etc of the screw groove, screw shaft, nut, balls, circulating hole, ball circulating path, return tube, tube fixture, groove, seats and reinforcement rib, which were exemplified in the above embodiment, may be optional and should not be limited as long as this invention can be accomplished.

Now referring to the drawings, an explanation will be given of the second to fourth embodiments of the ball screw device of this invention.

### Embodiment 2

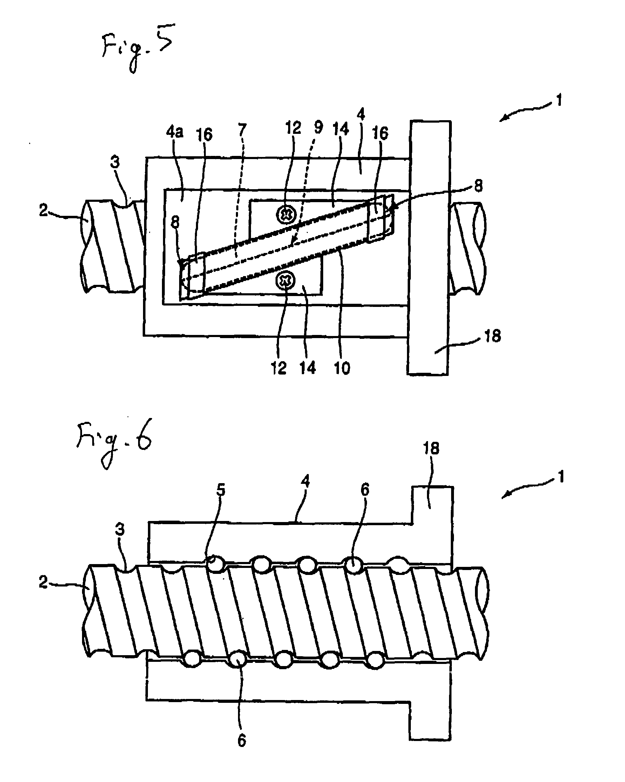

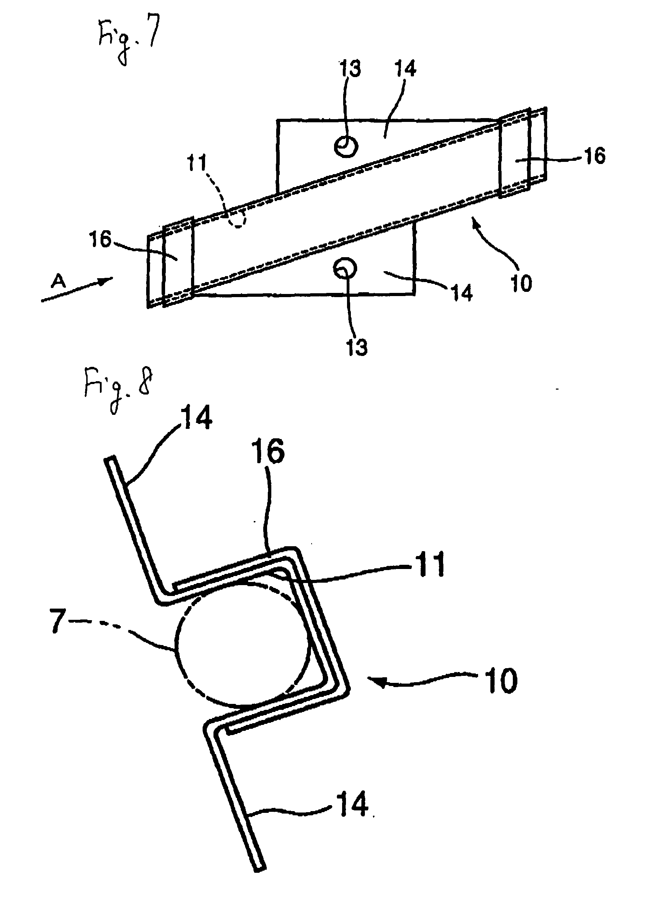

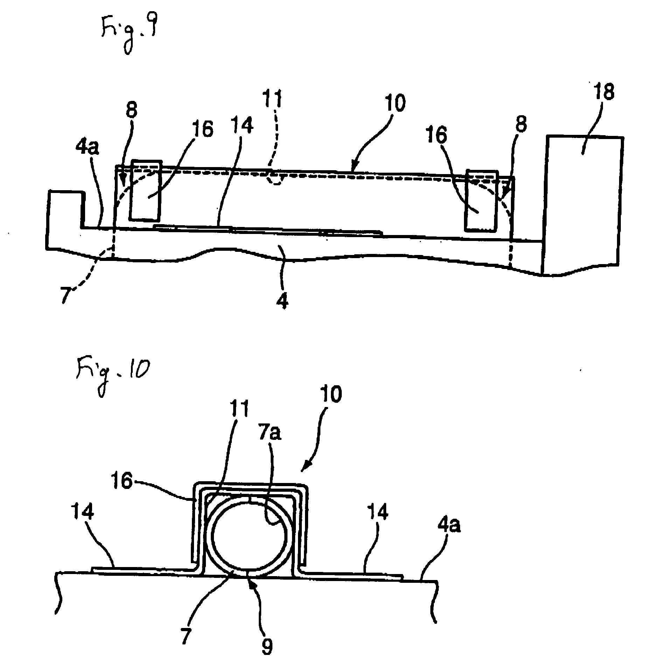

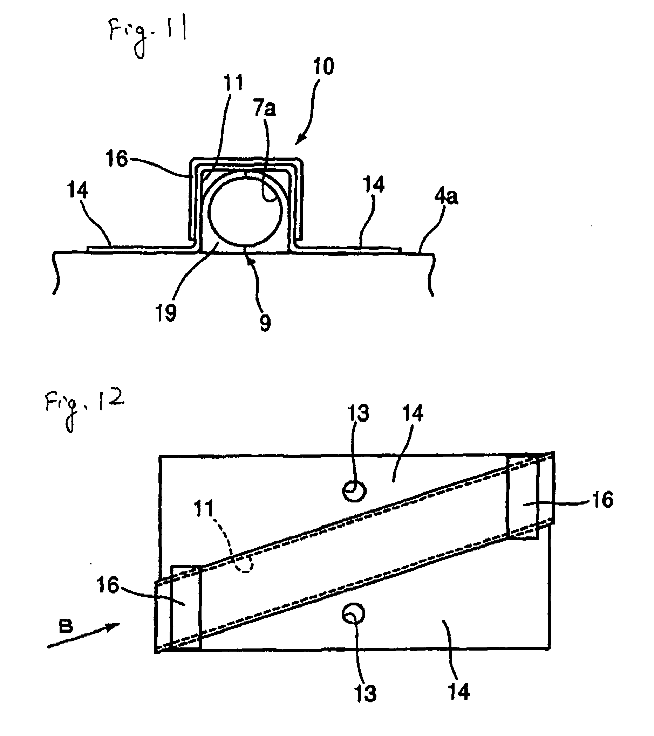

Fig. 5 is a top view of a ball screw device according the second embodiment. Fig. 6 is a sectional view of the ball screw device according to the second embodiment. Fig. 7 is a top view of a tube fixture according to the second embodiment. Fig. 8 is a view seen in direction A in Fig. 7. Fig. 9 is a side view showing the attached state of the tube fixture according to the second embodiment. Fig. 10 is a sectional view showing the attached state of the return tube according to the second embodiment.
In Figs. 5 and 6, reference numeral 101 denotes a ball screw device.

Reference numeral 102 denotes a screw shaft of the ball screw device 101. The screw shaft 102 is a bar-like member of steel material such as alloy steel. On the outer face of the screw shaft 102, a shaft raceway groove 103 having a nearly semi-arc sectional shape is helically formed with a predetermined lead angle.
Reference numeral 104 denotes a nut of the ball screw device 101. The nut 104 is a cylindrical member of a steel material such as alloy steel. On the inner face of the nut 104, a nut raceway groove 105 which is opposite to the shaft raceway groove 103 and has a nearly semi-arc sectional shape is formed with the same lead as the shaft raceway groove 103.

Reference numeral 106 denotes one of balls which are made of a steel material such as alloy steel. These balls rotate along the load path formed by the shaft raceway groove 103 and nut raceway groove to screw-engage the screw shaft 102 and the nut 104 with each other.
Reference numeral 107 denotes a return tube serving as a communicating member. The return tube is manufactured by metal press machining using a metallic material such as steel or injection molding using a resin material. The return tube is a U-shape tube having bent portions 108 formed at two points of a communicating path 107a (see Fig. 10) having a diameter permitting movement of the balls 106. Both ends of the return tube are fit in fitting holes communicating with the nut raceway groove 105 which are formed in a face 104a by cutting a part of the outer face of the nut 104 in the axial direction, and fixed by a tube fixture 110.

Thus, both ends of the load path are coupled by the communicating path 107a to form the circulating path along which the balls 106 circulate.
The return tube 107 according to this embodiment is formed by a pair of half-divided tubes when it is divided into the two parts in a vertical direction (direction perpendicular to a paper face in Fig. 5) along the circulating direction of the balls. When the half-divided tubes are merged at a merging portion 109 to form the single return tube 107, their inner faces serve as the communicating path 107a.

The tube fixture 110 is formed by bending a metallic material such as steel by metal-sheet press machining as shown in Figs. 7 and 8 so as to cover the entire length including the bent portions 108 on both sides of the communicating path 107a of the return tube 107 as shown in Figs. 5 and 9. The tube fixture 110 is composed of a nearly square sectional fitting groove 111 with which the outer face of the return tube 107 formed by merging the half-divided tubes at the merging portion 109, illustrated in two-dot chain line in Fig. 8 is inscribed; and seats 114 on which attaching holes 113 are formed for passing small screws 112 serving as tightening member. As shown in Fig. 10, with the outer face of the return tube 107 composed of the half-divided tubes merged at the merging portion 109 being fit in the fitting groove 111, the tube fixture 110 is attached to the face 104a of the nut 104.

Incidentally, the return tube shown in Fig. 9 is illustrated in only its outside shape.
Reference numeral 116 denotes one of reinforcement portions. The reinforcement portions 116 are manufactured by bending the metallic material such as a steel sheet in a nearly U-shape by metal-sheet press machining. The reinforcement portions 116 are arranged outside the positions corresponding to the bent portions 108a of the communicating path 107a of the return tube 107 fitting in the fitting groove 111 of the tube fixture 110. The reinforcement portions 116 are connected by the connecting means such as bonding so that they are formed integrally to the tube fixture 110.

The reinforcement member 116 is formed to make a parallelogram formed by the direction perpendicular to the axial direction to the nut 104 and the direction along the circulating direction of the balls 106, when seen from above in Fig. 7. The reinforcement member 116 is formed in such a shape that its ends do not reach the seats 114.
Incidentally, the reinforcement member 116 may be formed by draw forming the tube fixture 110 as to be monolithic with the tube fixture 110 simultaneously with the time of forming tube fixture 110.

The technique for connecting the reinforcement portion 116 should not be limited to bonding, but may be any other connecting method inclusive of fitting using friction, welding, screw-engaging, etc.
Reference numeral 118 denotes a flange which is provided on the outer periphery of the nut 104. The flange is secured to a moving stand of a machine (not shown) by bolts which pass through bolt holes made in the flange 118.
In the above circulating path, a plurality of balls 106 and a predetermined quantity of lubricant such as grease are sealed. By rotating the screw shaft 102, the balls 106 circulate along the circulating path while rotating on the load path so that the nut is moved in the axial direction. Thus, the rotation movement of the screw shaft 102 is converted into a linear motion.

An explanation will be given of the operation of the configuration described above.
With the half-divided tubes being merged into the single return tube at the merging portion 109, the return tube according to this embodiment is attached by fitting its both ends in the fitting holes communicating with the nut raceway groove 105 formed on the face 104a of the nut 104. After the fitting groove 111 of the tube fixture 110 is fit over the outer face of the return tube 107, small screws 112 are passed through the attaching holes 113 of the seats 114 and tightened on the face 104a. Thus, the return tube 107 is fixed to the nut 104.

In this case, the reinforcement portions 116 are formed at the positions of the tube fixture 110 corresponding to the bent portions 108 on both sides of the communicating path 107a of the return tube 107 so that the strength of the bent portions 108 is assured. For this reason, even if the ball lodging occurs in the communicating path 107a so that great expanding force acts on the bent portions 108, the merging portion 109 of the return tube 107 will not forcibly expanded and so the ball screw device 101 will not be damaged.
Further, since the return tube 107 is formed in a divided manner by metal press machining or injection molding, the machining of the return tube 107 is facilitated, thereby reducing the production cost.

Incidentally, it is not necessary to arrange the reinforcement portions 108 so as to cover the entire bent portions 108 of the communicating path 107a of the return tube 107. They have only to be arranged to cover a part of the bent portions.
It was explained that the fitting groove 111 fitting over the return tube 107 covers the entire length of the return tube. However, the fitting groove 111 is not required to cover the entire bent portions 108 but may cover a part of the bent portions 108. In short, the fitting groove 111 may have a length permitting the reinforcement portions 116 to be formed.

As described above, in accordance with this embodiment, the return tube is divided into two parts along the circulating direction of the balls, and fits in the fitting groove formed in the tube fixture so that the area to reach the bent portions on both sides of the communicating path of the return tube is overlaid. Further, the reinforcement portions formed in the tube fixture are arranged on the bent portions of the return tube. Thus, the strength of the bent portions can be assured by the reinforcement portions of the tube fixture. For this reason, even if the ball lodging occurs in the communicating path so that great expanding force acts on the bent portions, it is possible to prevent the merging portion of the return tube from being expanded, thereby realizing the long life time of the ball screw device.

Incidentally, in this embodiment, it was explained that the communicating member is the return tube 107. However, the communicating member should not be limited to the structure as described above, but may be the structure as shown in Fig. 11.
In Fig. 11, reference numeral 119 denotes a communicating block serving as the communicating member. The communicating path 107a having the bent portions 108 on both sides of the same return tube as the above return tube 107 is formed. The sectional shape between the bent portions 108 is formed in an arch shape composed of a semi-arc having a diameter nearly equal to the outer diameter of the return tube and extended segments of its both ends in a tangential direction of the semi-arc. The sides are formed in a square shape, or a square shape in which the upper corners on both sides are nearly 1/4 arc shape like the outside shape of the return tube 107 indicated in broken line in Fig. 9.

Further, both ends of the communicating path 107a of the of the communicating block 119 are formed in a cylindrical shape fit in the fitting hole communicating with the nut raceway groove 105 formed on the face 104a of the nut 104. Like the above return tube 107, the return tube is formed in a configuration divided into two parts in the vertical direction along the circulating direction of the balls 106. When these half-divided tubes are merged at the merging portion 109 to form a single communicating block 119, their inner face serves as the communicating path 107a. As shown in Fig. 11, after both sides of the communicating block 119 and a semi-arc shaped top thereof are fit in the fitting groove 111 of the tube fixture 110, the return tube is secured to the face 104a of the nut 104 by the tube fixture 110.

Such a communicating block 119 is effective when it is manufactured by injection molding using resin material.

### Embodiment 3

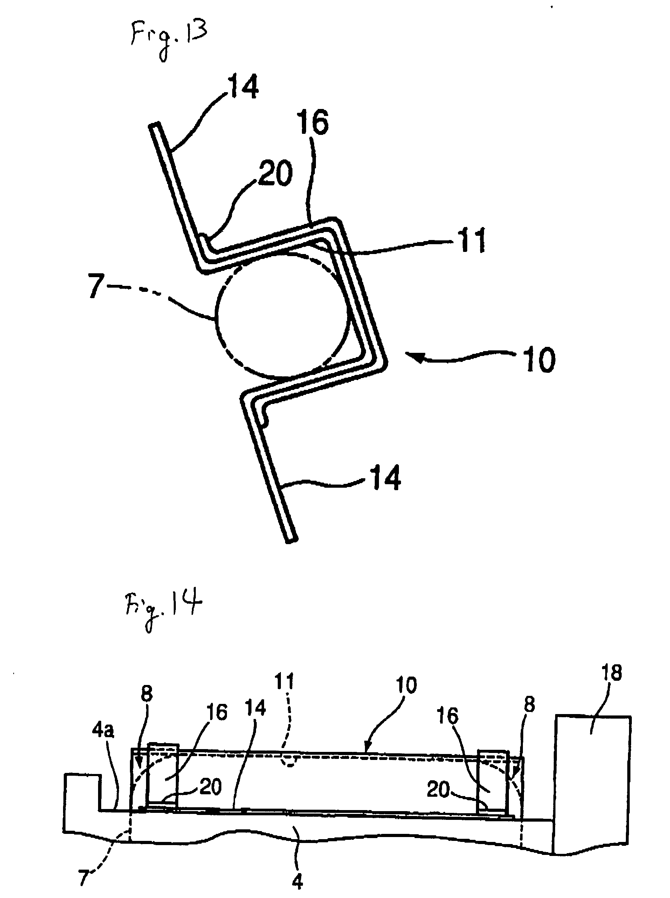

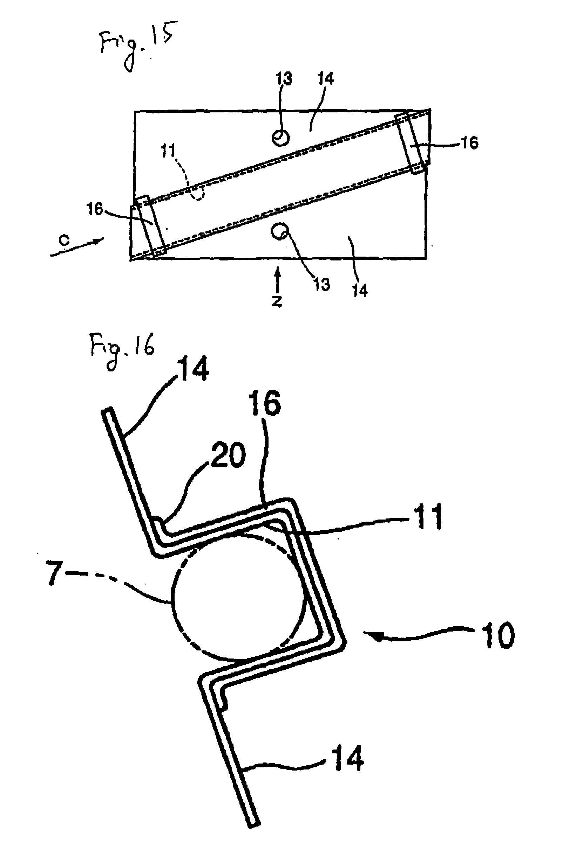

Fig. 12 is a top view of a tube fixture according to the third embodiment. Fig. 13 is a view seen in direction B in Fig. 12. Fig. 14 is a side view of the attached state of the tube fixture according to the third embodiment. Incidentally, in these figures, like reference numerals refer to like elements in the second embodiment.
In the tube fixture 110 according to this embodiment, as shown in Fig. 14, seats 114 are formed over the entire length of the tube fixture 110. Reinforcement portions 116 are arranged at the positions corresponding to the bent portions 108 of the communicating path 107a of the return tube 107. As shown in Fig. 12, when seen from above, they are formed in a square shape formed by the axial direction of the nut 104 and its perpendicular direction. As shown in Fig. 13, their ends reach the seats 114 to provide bent segments 120 bent along the seats 114.

In accordance with such a configuration of the tube fixture, in addition to the same effect as that of the above second embodiment, the rigidity of the reinforcement portions are enhanced by the bent segments formed along the seats so that the strength of the bent portions can be further improved.

### Embodiment 4

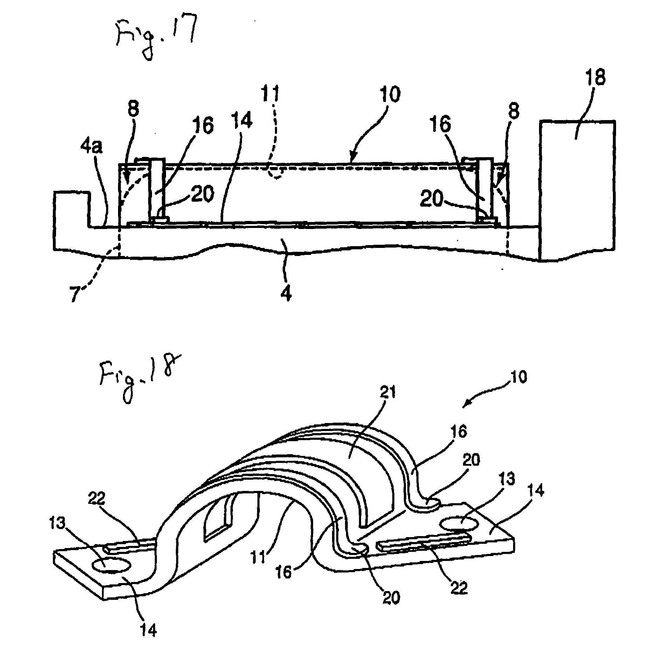

Fig. 15 is a top view of a tube fixture according to the fourth embodiment. Fig. 16 is a view seen in direction C in Fig. 15. Fig. 17 is a side view of the attached state of the tube fixture according to the fourth embodiment.
Incidentally, in this embodiment, like reference numerals refer to like elements in the third embodiment.
In the tube fixture 110 according to this embodiment, seats 114 are formed over the entire length of the tube fixture 110. As shown in Fig. 17, reinforcement portions 116 are arranged at the positions corresponding to the bent portions 108 of the communicating path 107a of the return tube 107. As shown in Fig. 15, when seen from above, they are formed in a square shape formed by the direction along the circulating direction of the balls 106 and its perpendicular direction. As shown in Fig. 16, at their ends, the same bent segments 120 as in the third embodiment are formed.

In accordance with such a configuration of the tube fixture also, the same effect as that of the third embodiment can be obtained.
Fig. 18 is a perspective view of the tube fixture according to the fourth embodiment.
In this configuration, the sectional shape of the fitting groove 111 is formed in an arch shape composed of a semi-arc having a diameter nearly equal to the outer diameter of the return tube and extended segments of its both ends in a tangential direction of the semi-arc.

Further, as shown in Fig. 18, the tube fixture 110 is provided with a reinforcement rib 121 which is formed by protruding the central area of the fitting groove 111 in the circulating direction of the balls 106 by e.g. press machining and reinforcement ribs 122 formed on both seats 114.
As described above, if the fitting groove 111 is formed to provide the arch sectional shape, and the reinforcement ribs 121, 122 are added, in addition to the same effect as described above, the rigidity of the tube fixture 110 can be further enhanced.

Incidentally, in each of the embodiments described above, it was explained that the return tube is divided into two parts.
However, the number of divided parts should not be limited but may be three or more.
Further, in each of the embodiments described above, it was explained that by rotating the screw shaft of the ball screw device, the nut is moved in the axial direction. However, also when this invention is applied to the ball screw device in which by rotating the nut, the screw shaft is moved in the axial direction, the same effect can be obtained.

Additionally, by increasing the thickness of the entire tube fixture, the stress applied to the return tube can be received. However, only increasing the thickness of the pressing portion increases the radius of curvature of the connecting segment between the seat and the ridge in which the return tube in fit. If the radius of curvature increases, the contact position of the seat face with the nut is apart from the return tube so that the bolt for securing the tube fixture is apart from the return tube. As a result, the rigidity of the securing portion in the direction of pushing up the return tube cannot be enhanced.
Further, the area of the ridge which supports the return tube is reduced so that the rigidity for the opening/extending of the return tube cannot be enhanced. So, only increasing the thickness of the tube fixture reduces the capability of the tube fixture to restrict the nut and the capability of the tube fixture to restrict the return tube.
On the other hand, as in this invention described above, in accordance with the configuration in which the reinforcement portion is provided on the outer face of the tube fixture, the stress applied to the return tube can be received and the restriction for the return tube can be assured.
This invention has been explained in detail and referring to the specific embodiment. However, it is apparent to those skilled in the art that this invention can be changed or modified in various manners without departing from the spirit and scope of the invention.
This application is based on Japanese Patent Application (Patent Application No. 2004-370818) filed on December 22, 2004 and Japanese Patent Application (Patent Application No. 2005-231250) filed on August 9, 2005, and the contents thereof are incorporated herein by reference.

### Industrial Applicability

In accordance with this invention, even when circulating failure of balls occurs, it is possible to prevent the return tube from floating so that the smooth circulation of the balls can be assured to preferably keep the operability of the ball screw device.

Further, in accordance with this invention, even if the ball lodging occurs in the communicating path so that great expanding force acts on the bent portions, it is possible to prevent the merging portion of the communicating members from being forcibly expanded, thereby increasing the life time of the ball screw device.
Further, since the tube fixture can be manufactured by metal stamping of a metallic sheet or injection molding of synthetic resin, the tube fixture which can be mass-manufactured at low cost can be provided.

## Claims

1. A ball screw device comprising:
a screw shaft comprising a helical shaft raceway groove formed on an outer face thereof;
a nut comprising a nut raceway groove opposite to the shaft raceway groove, formed on the inner face;
a load path formed by the shaft raceway groove and the nut raceway groove;
a plurality of balls rotatably mounted in the load path;
a communicating member which communicates both ends of the load path to guide the balls an exterior of the nut and comprises a bent portion;
a tube fixture that fixes the communicating member to the nut;
the plurality of balls which circulate along a circulating path formed by the load path and the communicating member; and
a reinforcement member that receives stress applied to the bent portion of the communicating member and is provided on an outer face of the tube fixture.

2. The ball screw device according to claim 1, wherein
the tube fixture comprises:
a seat which secures the tube fixture to the nut; and
a ridge covering the communicating member and being in nearly parallel to the seat, and
the reinforcement member is provided at least on the ridge.

3. The ball screw device according to claim 1, wherein
the communicating member comprises a bent portion for converting the rolling direction of the balls, and
the reinforcement member is provided in the vicinity of the bent portion of the communicating member.

4. The ball screw device according to claim 1, wherein
the tube fixture comprises:
a groove into which the communicating member fits; and
a seat abutting on the nut, and
a reinforcement rib is integrally formed so as to be protruded from a face of at least one of the groove and the seat.

5. The ball screw device according to claim 4, wherein
the protruding height of the reinforcement rib is 1/5 to 2 times of a thickness of the tube fixture.

6. The ball screw device according to claim 4, wherein
the tube fixture is a press machining product of a metallic sheet.

7. The ball screw device according to claim 6, wherein
the tube fixture is subjected to thermo-hardening processing.

8. The ball screw device according to claim 4, wherein
the tube fixture is an injection-molding product of synthetic resin.

9. The ball screw device according to claim 1, wherein
the communicating member is formed of a member divided into at least two parts along the circulating direction of the balls;
the tube fixture comprises a communicating path and bent portions formed on both ends of the communicating path; and
the tube fixture comprises:
a fitting groove covering the bent portions and fitting over the communicating member, and
a reinforcement member arranged on the bent portion.

10. The ball screw device according to claim 9, wherein the communicating member is made of a resin material.

11. The ball screw device according to claim 9, wherein the communicating member is made of a metallic material.

12. The ball screw device according to claim 9, wherein the communicating member is a metal press machining product of a metallic material.

13. The ball screw device according to claim 9, wherein the communicating member is an inj ection-molding product of a resin material.

14. The ball screw device according to claim 9, wherein the tube fixture is a metal-sheet press machining product.

15. The ball screw device according to claim 9, wherein the tube fixture is a draw forming product of a metallic material.

16. The ball screw device according to claim 1, wherein the reinforcement member is formed in an uneven shape on the outer face of the tube fixture, or stacked on the outer face of the tube fixture.
